# EUROPEAN PATENT SPECIFICATION

(11) **EP 3 779 736 B1**
(45) Date of publication and mention of the grant of the patent: **11.10.2023**
(21) Application number: 19784629.8
(22) Date of filing: 04.02.2019
(51) Int. Cl.: G06F 21/31, G06F 21/62, H04W 12/02, H04W 12/06, H04W 12/63

(54) **AUTHENTICATION DEVICE, INDIVIDUAL IDENTIFICATION DEVICE, AND INFORMATION PROCESSING DEVICE**
AUTHENTIFIZIERUNGSVORRICHTUNG, VORRICHTUNG ZUR INDIVIDUELLEN IDENTIFIZIERUNG UND INFORMATIONSVERARBEITUNGSVORRICHTUNG
DISPOSITIF D'AUTHENTIFICATION, DISPOSITIF D'IDENTIFICATION INDIVIDUEL ET DISPOSITIF DE TRAITEMENT D'INFORMATIONS

(30) Priority: 11.04.2018 JP 2018075991
(43) Date of publication of application: 17.02.2021
(73) Proprietor: NTT DOCOMO, INC., Chiyoda-ku Tokyo 100-6150 (JP)
(72) Inventor: KUDOH, Fumiaki, Tokyo 100-6150 (JP); KURIYAMA, Shigeyuki, Tokyo 100-6150 (JP); TAKAGI, Ayako, Tokyo 100-6150 (JP); IMAI, Yasushi, Tokyo 100-6150 (JP); EBARA, Hidetoshi, Tokyo 100-6150 (JP)
(74) Representative: Hoffmann Eitle
(86) International application number: PCT/JP2019/003812
(87) International publication number: WO 2019/198315

(56) References cited:
- JP-A- 2003 099 403
- JP-A- 2007 013 883
- JP-A- 2016 115 095
- JP-A- 2017 063 343
- US-A1- 2014 129 596
- US-A1- 2016 232 531
- HIRAIWA, SATOSHI: "Application of the wireless LAN information to user authentication", Proceedings D of IEICE, vol. J99-D, no. 10 1 October 2016 (2016-10-01), pages 1034-1044, XP009523895, DOI: 10.14923/transinfj.2015LIP0005

## Description

### TECHNICAL FIELD

The present invention relates to authentication apparatuses, to individual identification apparatuses, and to information processing apparatuses.

### BACKGROUND ART

There are known individual identification methods to use information about the activity history of a user.

Patent Document 1 discloses an information processing system having a terminal apparatus, such as a smartphone with a global positioning system (GPS) module, and an identification server that identifies individuals by using location information logs in the terminal apparatus. In this system, the identification server extracts characteristic patterns of places and durations of stay of users from the location information logs, and identifies users by evaluating the degree of match between these patterns and patterns that are stored in advance. With this identification server, individuals are identified by using location information logs, which are based on GPS signals, with accuracy on the order of several meters, so that the accuracy of identifying individuals can be increased.

Patent Document 2 relates to a method for authenticating a payment card user by generating and comparing geotemporal fingerprints of users' on-line social activities with records of payment card usage.

### Related Art Document

### Patent Document

Patent Document 1: Japanese Patent Application Laid-Open Publication No. 2017-130017
Patent Document 2: US 2014/0129596 A1

### SUMMARY OF THE INVENTION

### Problem to be Solved by the Invention

However, according to conventional techniques, users' locations are specified with high accuracy from location information logs, and this has been a problem from the perspective of protection of personal privacy. In addition, since GPS signals specify the locations of individuals by latitude and longitude, the conventional techniques have a drawback in that processing loads for analyzing the location information and generating characteristic patterns are substantial.

The present invention has been made in view of the above circumstances and has as an object to enhance the protection of privacy while reducing processing load.

### Means of Solving the Problems

The invention is defined by the appended claims.

In order to solve the above problems, an authentication apparatus according to a preferred example of the present invention includes a calculator configured to calculate, based on a first set and a second set, similarity indicative of how similar the second set is to the first set, in which: the first set is representative of characteristics of a true user of a mobile device and has as elements identifiers of one or more cells where the mobile device was located during a first period previous to a time at which an authentication request was received; and the second set has as elements identifiers of one or more cells where the mobile device was located during a second period differing from the first period; and an authenticator configured to, based on the similarity, authenticate a person who carries the mobile device during the second period as a true user.

An individual identification apparatus according to a preferred example of the present invention includes a calculator configured to calculate for each of a plurality of mobile devices, based on a first set generated for each of the plurality of mobile devices and a second set, a similarity indicative of how similar the second set is to the first set, in which: the first set is representative of characteristics of a true user of the mobile device and has as elements identifiers of one or more cells where the mobile device was located during a first period; and the second set has as elements identifiers of one or more cells where a specific mobile device was located during a second period differing from the first period; an identifier configured to identify which of users of the plurality of mobile devices is a person who carried the specific mobile device during the second period, based on the similarity calculated for each mobile device in the calculator.

An information processing apparatus according to a preferred example of the present invention includes a generator configured to generate a first set and a second set, in which: the first set is representative of characteristics of a true user of a mobile device and has as elements identifiers of one or more cells where the mobile device was located during a first period; and the second set has as elements identifiers of one or more cells where the mobile device was located during a second period differing from the first period; and a calculator configured to calculate similarity that indicates how similar the second set is to the first set.

### Effects of the Invention

According to the present invention, it is possible to provide an authentication apparatus, an individual identification apparatus, and an information processing apparatus that allow for enhanced protection of privacy while reducing processing load.

### BRIEF DESCRIPTION OF THE DRAWINGS

FIG. 1 is a diagram to show a structure of a system with an authentication server according to a first embodiment;
FIG. 2 is an explanatory diagram to show an example of a log stored in a storage server;
FIG. 3 is a block diagram to show a functional structure of the authentication server;
FIG. 4 shows an example of identity template information;
FIG. 5 shows an example of a second set;
FIG. 6 is a diagram to explain a first period and a second period;
FIG. 7 is a flowchart to show an example of a first set generation process by the authentication server;
FIG. 8 is a flowchart to show an example of an authentication process by the authentication server;
FIG. 9 is a diagram to explain the similarities between a first set and second sets;
FIG. 10 is a diagram to explain a first modification of the first period and the second period;
FIG. 11 is a diagram to explain a second modification of the first period and the second period;
FIG. 12 is a flowchart to show the first set updating process in the event address is changed;
FIG. 13 is a block diagram to show a functional structure of an authentication server according to a second embodiment;
FIG. 14 is a diagram to explain individual identification based on similarity;
FIG. 15 is a flowchart to show an example of an individual identification process;
FIG. 16 is a diagram to show a structure of a system with a generation server according to a third embodiment;
FIG. 17 is a block diagram to show a functional structure of the generation server;
FIG. 18 is a flowchart to show an example of a similarity calculation process by the generation server; and
FIG. 19 is a diagram to show an example of a hardware structure of a mobile device, a base station, a storage server, an authentication server and a generation server according to an embodiment of the present invention.

### MODES FOR CARRYING OUT THE INVENTION

Embodiments of the present invention will be described in detail below with reference to the accompanying drawings. The embodiments described below are preferred specific examples of the present invention. Therefore, a variety of technically preferable limitations are applied to these embodiments. However, the scope of the present invention is not limited to these forms, unless otherwise specified in the following description.

### First Embodiment

### 1. Overall Structure of System

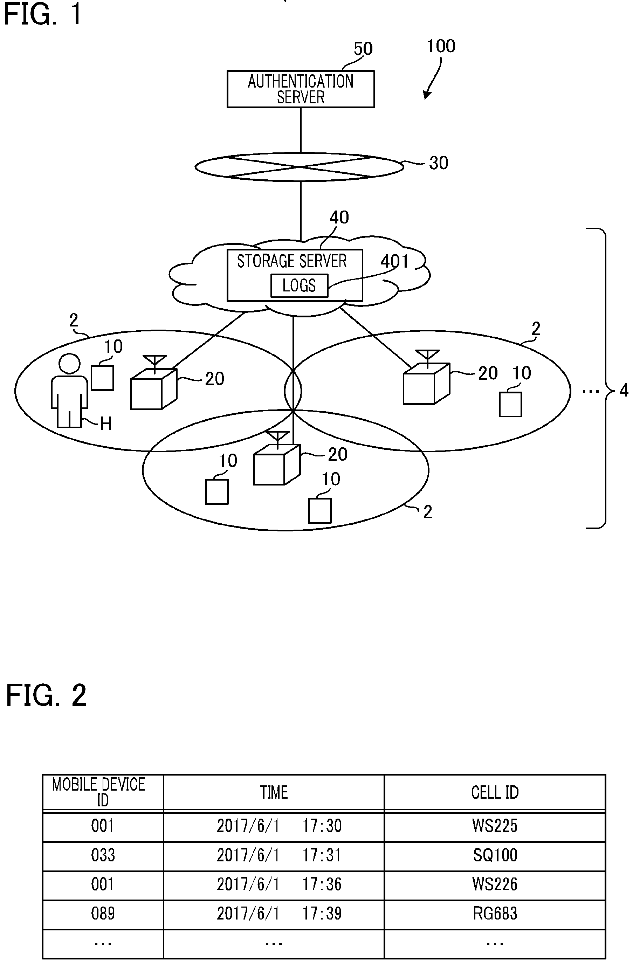

FIG. 1 is a diagram to show a structure of a system with an authentication server according to a first embodiment. As shown in FIG. 1, a system 100 has a mobile communication system 4, a network 30, such as the Internet, and an authentication server 50. The mobile communication system 4 has base stations 20, a storage server 40, and mobile devices 10. Also, the mobile communication system 4 includes a wireless network control station, a switching center and so forth, which are not illustrated. In the mobile communication system 4, a mobile device 10 is capable of voice communication and data communication with other mobile devices 10. Furthermore, a mobile device 10 is assigned an identifier that uniquely identifies that mobile device 10. In the following description, an identifier that uniquely identifies a mobile device 10 will be referred to as a "mobile device ID". The mobile device 10 has stored the mobile device ID therein. For example, a subscriber identity module (SIM) ID or the terminal ID of the mobile device 10 serves as the mobile device ID.

The mobile device 10 has a function for performing radio communication. Examples of the mobile device 10 include, for example, smartphones, mobile phones, tablets, wearable terminals and so forth.

In the example shown in FIG. 1, one base station 20 serves one cell 2. The cell 2 is a range in which the base station 20 can communicate with mobile devices 10. A number of cells 2 are present in the mobile communication system 4. Each cell 2 is assigned an identifier that uniquely identifies that cell 2. In the following description, an identifier that uniquely identifies a cell 2 will be referred to as a "cell ID". The radius of the size of a cell 2 is, for example, several hundred meters. The mobile communication system 4 can know the location of a user H of a mobile device 10 by specifying the cell ID of the cell 2 where the mobile device 10 is located. However, the degree of accuracy in location is not as accurate as compared to GPS signals that specify locations on the order of several meters. When using GPS signals, there is a high probability of being able to specify, for example, which shops the user H has stopped by, but with the cell IDs, it is unlikely that the shops the user H stopped by can be specified.

As the mobile device 10 moves, the cell 2 where the mobile device 10 is located switches. A storage server 40 stores a log 401, in which a mobile device ID, a cell ID of a cell 2 where the mobile device 10 is located, and a time (typically, a time at which the mobile device 10 starts being located in the cell 2) are associated with each other. The log 401 is updated every time the cell 2 where the mobile device 10 is located is switched. Therefore, by referring to the log 401, the travel route of the mobile device 10 can be known in association with the time. Furthermore, the storage server 40 may acquire, from each of a plurality of base stations 20, a set of (i) the mobile device IDs of mobile devices 10 that are located in the cell 2 of that base station 20, (ii) a corresponding cell ID, and (iii) the time. In this case, when a new mobile device 10 joins the cell 2 served by the base station 20, the base station 20 transmits, to the storage server 40, a set of (i) the mobile device ID of the new mobile device 10, (ii) the cell ID, and (iii) the time of joining.

FIG. 2 is an explanatory diagram to show an example of a log 401 stored in the storage server 40. From the log 401 shown in FIG. 2, it can be seen that the mobile device 10 with a mobile device ID of "001" was initially located in a cell 2 with a cell ID of "WS225" at "2017/6/1 17:30", and started to be located in a cell 2 with a cell ID of "WS226" at "2017/6/1 17:36". Note that the storage server 40 may manage the log 401 by associating the times and cell IDs with each other on a per mobile device ID basis. Also, the storage server 40 may update the log 401 at predetermined time intervals. In addition, the storage server 40 may be comprised of one server, or may be comprised of more than one server.

The mobile communication system 4 is connected with a network 30. The mobile device 10 can communicate with the authentication server 50 via the network 30. The authentication server 50 functions as an authentication apparatus that receives an authentication request transmitted from a mobile device 10 and executes personal authentication of the user H who carries the mobile device 10. The authentication server 50 provides services to the user H of the mobile device 10. These services may include, for example, providing a variety of contents, the purchase of products, the use of online banking, and so forth. The authentication server 50 authenticates, for example, a person who attempts to log in to a service as to whether the person is the true user H.

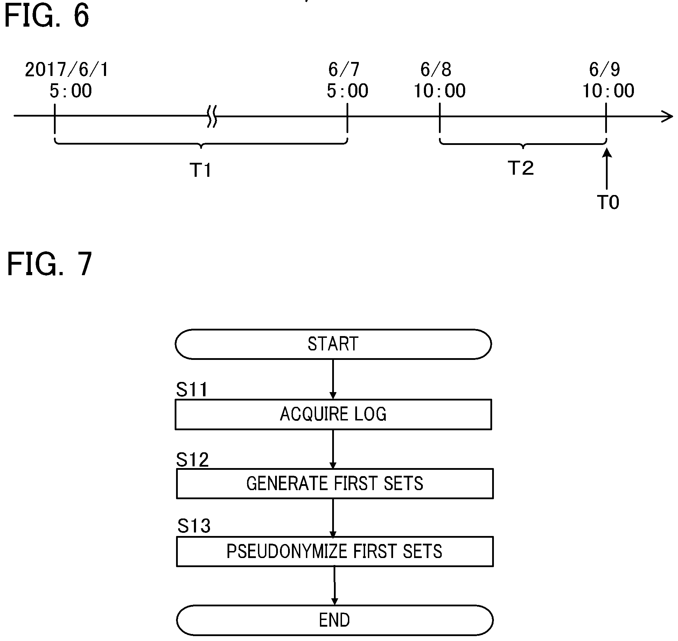

The authentication server 50 performs personal authentication by using, as location information, the cell IDs of cells 2 where the mobile device 10 was located. To be more specific, the cell IDs of cells 2 where the mobile device 10 carried by the user H was located during a first period T1 (see FIG. 6) are registered with the authentication server 50 as an identity template (first set), in advance, as information that characterizes the personal activity of the user H. The identity template is provided per user H who is subject to authentication by the authentication server 50. Then, when the authentication server 50 receives an authentication request, the authentication server 50 performs personal authentication in response to the authentication request based on information about the cell IDs of cells 2 where the mobile device 10 was located during a second period T2 (see FIG. 6) (second set), and the identity template.

### 2. Functions of Authentication Server

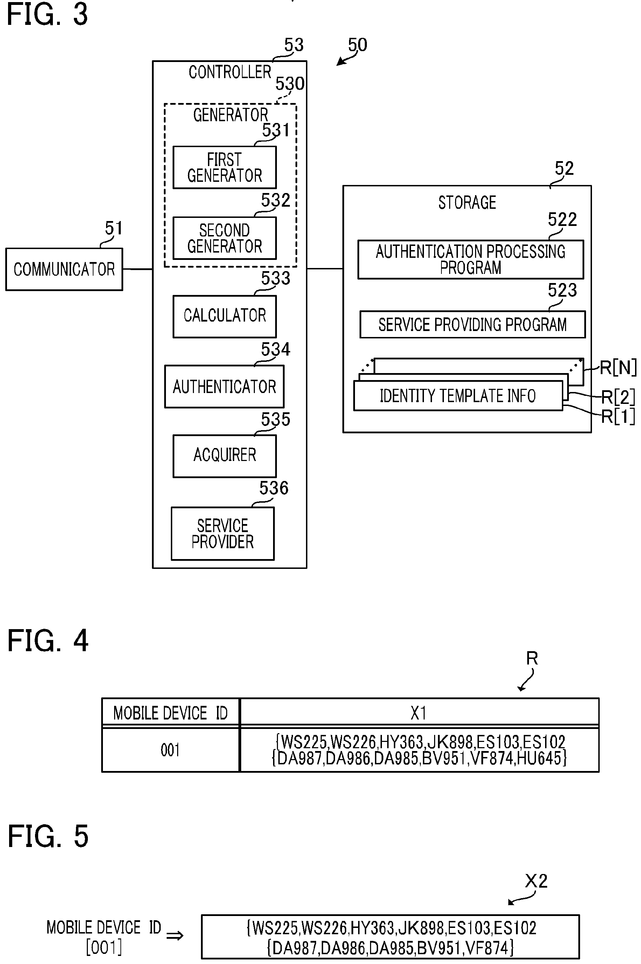

FIG. 3 is a block diagram to show a functional structure of the authentication server. As shown in FIG. 3, the authentication server 50 has a communicator 51, a storage part 52 and a controller 53.

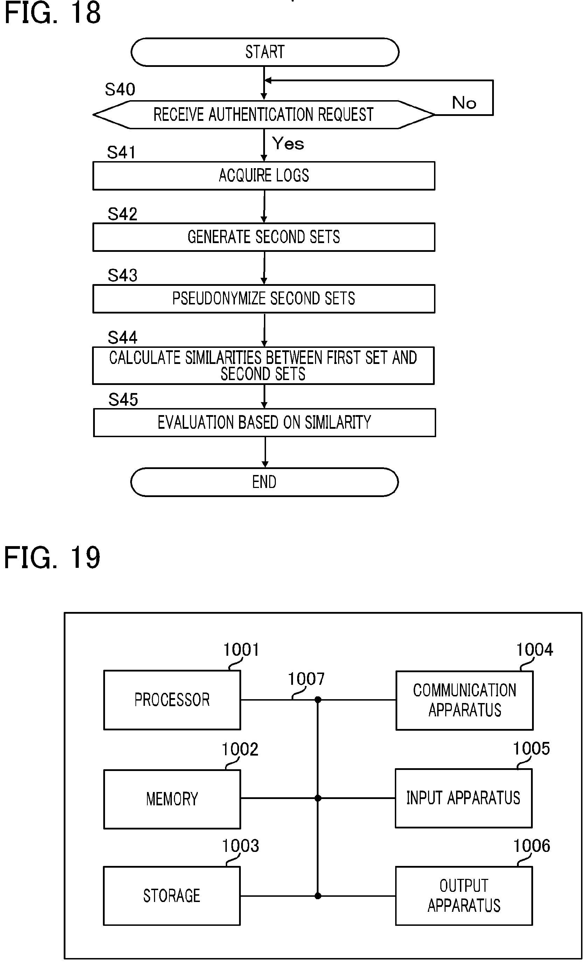

The communicator 51 communicates with an external apparatus, such as the storage server 40, via the network 30. The communicator 51 is comprised of, for example, a communication apparatus 1004 shown in FIG. 19.

The storage part 52 is a recording medium readable by the controller 53. The storage part 52 stores a variety of programs and a variety of data. The storage part 52 has an authentication processing program 522, a service providing program 523, and identity template information R stored therein. The storage part 52 is comprised of, for example, at least one of a memory 1002 and a storage 1003 shown in FIG. 19.

The controller 53 functions as a control center for the authentication server 50. The controller 53 functions as a generator 530, a calculator 533, an authenticator 534, and an acquirer 535 by reading and executing the authentication processing program 522 stored in the storage part 52. Also, the controller 53 functions as a service provider 536 by reading and executing the service providing program 523 stored in the storage part 52. The controller 53 is comprised of, for example, a processor 1001 shown in FIG. 19.

The acquirer 535 acquires a log 401 included in the storage server 40. Specifically, the acquirer 535 acquires a log 401, including the mobile device ID of the mobile device 10, the identifiers of cells 2 where the mobile device 10 was located, and time information indicative of a time at which the mobile device 10 was located in the cell, from the storage server 40, via the communicator 51.

The generator 530 has a first generator 531 and a second generator 532. The first generator 531 generates a first set X1 to have, as elements, the cell IDs of one or more cells where the mobile device 10 was located during the first period T1, which is previous to the time at which the authentication request was received. The first set X1 is used as an identity template representative of the characteristics of the true user of the mobile device 10. The first generator 531 generates identity template information R, in which the first set X1 (identity template) and the mobile device ID are associated with each other, and stores the identity template information R in the storage part 52. The identity template information R is generated for as many as the number of users H who are subject to personal authentication. With this example, a case is assumed in which the number of users H subject to personal authentication is N (N is an integer of 1 or more). Therefore, the storage part 52 stores identity template information R[1] to R[N]. The following description will refer to "identity template information R" unless it is necessary to distinguish between N pieces of identity template information R[1] to R[N].

FIG. 4 shows an example of identity template information R. In this example, a mobile device ID of "001" and a first set X1 are associated with each other. The first set X1 of this example includes, as elements, twelve cell IDs including the cell ID "WS225" and the cell ID "WS226".

The second generator 532 generates a second set X2 to have, as elements, the cell IDs of cells where the mobile device 10 was located during a second period T2 differing from the first period T1. An example of the second set is shown in FIG. 5. The second set X2 of this example includes, as elements, the cell IDs of eleven cells 2 where the mobile device 10 with the mobile device ID "001" served during the second period T2.

FIG. 6 is a diagram to explain the first period and the second period. The first period T1 and the second period T2 are each defined by a starting point and an end point. In the example shown in FIG. 6, the first period T1 is one week from 5:00 of June 1, 2017 to 5:00 of June 7, 2017. The second period T2 is one day from 10:00 of June 8, 2017 to 10:00 of June 9, 2017, for example. Also, the second period T2 includes the time the communicator 51 received the authentication request from the mobile device 10, i.e., the authentication request time T0, which is 10:00 of June 9, 2017.

Furthermore, in the present embodiment, the first period T1 is a period preceding the second period T2, and the length of the first period T1 is longer than the length of the second period T2. It is of note that the length of the first period T1 and the length of the second period T2 are not limited to the periods illustrated, and can be configured in a freely selected manner.

In addition, the first generator 531 pseudonymizes each element of the first set X1 by using a one-way function, and the second generator 532 pseudonymizes each element of the second set X2 by using a one-way function. For example, the first generator 531 pseudonymizes each element of the first set X1 by using a hash function, which is one type of one-way function. Similarly, the second generator 532 pseudonymizes each element of the second set X2 by using a hash function.

The calculator 533 shown in FIG. 3 calculates the similarity between the first set X1 and the second set X2. The similarity is the degree to show how similar the first set X1 and the second set X2 are. The Jaccard index may be a typical example of similarity, but the Sorensen-Dice coefficient or the Szymkiewicz-Simpson coefficient may be used as well. When the set of the logical sums of the first set X1 and the second set X2 is denoted by set A, and the set of the logical products of the first set X1 and the second set X2 is denoted by set B, the Jaccard index is denoted by the number of elements in set B obtained by dividing by the number of elements in set A. For example, the number of elements in the first set X1 shown in FIG. 4 is twelve, and the number of elements in the second set X2 shown in FIG. 5 is eleven. In addition, the first set X1 is the same as the second set X2, except that the first set X1 includes the element "HU645". When the similarity between the first set X1 and the second set X2 in this case is represented by the Jaccard index, the similarity would be approximately 0.92 (=11/12).

The similarity may be determined using a first set X1 with non-pseudonymized elements and a second set X2 with non-pseudonymized elements, or may be determined using a first set X1 with pseudonymized elements and a second set X2 with pseudonymized elements.

The authenticator 534 authenticates the person who carried the mobile device 10 during the second period T2 as the true user H. To be more specific, if the similarity is less than a threshold, the authenticator 534 does not authenticate the person who carried the mobile device 10 during the second period T2 as the true user H. If the similarity is equal to or greater than the threshold, the authenticator 534 authenticates the person who carried the mobile device 10 during the second period T2 as the true user H. In the latter case, it is determined that the true user H carries the mobile device 10 that has transmitted the authentication request.

The service provider 536 determines whether or not to provide the desired service to the user H, based on the authentication result in the authenticator 534. For example, the service provider 536 allows the service to be provided when the authenticator 534 performs the authentication successfully, and does not allow the service to be provided when the authenticator 534 fails the authentication.

The authentication server 50 may be comprised of one server, or may be comprised of a number of servers. In the latter case, the authentication servers 50 may cooperate to exert the functions of the controller 53. Therefore, for example, the authentication server 50 may have the following: a server with a generator 530, a calculator 533, an authenticator 534 and an acquirer 535; and a server with a service provider 536. For example, the authentication server 50 may have the following: a server with a generator 530, a calculator 533 and an acquirer 535; and a server with an authenticator 534 and a service provider 536.

### 3. Operation of Authentication Server

Next, the main operation of the authentication server 50 will be described. The authentication server 50 executes a first set generation process for generating an identity template, an authentication process and a service providing process. The authentication process includes a second set generation process, a similarity calculation process, and an authentication process. Hereinafter, these processes will be described one by one.

### 3-1. First Set Generation Process

FIG. 7 is a flowchart to show an example of the first set generation process by the authentication server. The first set generation process is executed by the acquirer 535 and the first generator 531. The first set generation process is executed, for example, in every predetermined period.

First, the acquirer 535 acquires the log 401 to include the identifiers of cells 2 where the mobile device 10 was located, and time information indicative of a time at which the mobile device 10 was located in the cell, from the storage server 40 (S11). To be more specific, the acquirer 535 transmits a log request, which includes one or more mobile device IDs and the starting time and end time of the first period T1, to the storage server 40, via the communicator 51. The acquirer 535 receives a log response including the log 401 of the first period T1, from the storage server 40, via the communicator 51.

The acquirer 535 may generate a log request to cover all the mobile device IDs that are subject to authentication by the authentication server 50. All the mobile device IDs that are subject to authentication are the mobile device IDs of mobile devices 10 carried by users H who subscribe to the services provided by the authentication server 50. The acquirer 535 generates such an extensive log request, so that the logs 401 required for generating identity templates can be acquired efficiently.

After that, the first generator 531 generates first sets X1, on a per mobile device ID basis, based on the logs 401 acquired in step S11 (S12). The logs 401 include times as shown in FIG. 2, and cell IDs are the only elements of first sets X1. Accordingly, the first generator 531 removes the time information from the logs 401 and generates first sets X1 that include cell IDs as elements. In addition, the first generator 531 removes the overlapping cell IDs and generates first sets X1. Therefore, as shown in FIG. 4, the first sets X1 do not include the cell IDs of cells 2 in an overlapping way. Note that, based on cell IDs associated with times, it is possible to identify when and on what route a user H carrying a mobile device 10 has traveled. Furthermore, even if the time information is removed from a log 401, as long as the order of cell IDs that appear in the log 401 can be specified, the route the user H has traveled can be identified. In contrast to this, a first set X1 includes cell IDs as elements, and therefore, even if the user H's range of activity can be identified from the first set X1, it is still difficult to specify the route the user H has traveled. Therefore, although the first set X1 shows personal characteristics of the user H, the first set X1 is superior to the log 401, in terms of protecting the privacy of the user H.

The first generator 531 may provide an upper limit for the number of cell IDs that is included in a first set X1. In this case, among the cell IDs included in the log 401 of a mobile device ID, a number of cell IDs to match the upper limit value, in descending order of frequency, may be made elements of the first set X1. For example, the first generator 531 may set the upper limit value to 100.

Next, the first generator 531 pseudonymizes each element of the first sets X1 (S13). Note that step S13 may be omitted. Then, the first generator 531 generates identity template information R, in which mobile device IDs are associated with first sets X1, and stores this information in the storage part 52.

As described above, the first set generation process is executed every predetermined period. However, the predetermined period is freely selected. The predetermined period may be, for example, 24 hours, 10 minutes, etc. In addition, the trigger for starting the first set generation process is not limited to the passage of a predetermined period. For example, the first generator 531 may start the first set generation process when the log 401 stored in the storage server 40 is updated.

In step S 12, if identity template information R including a first set X1 is already recorded in the storage part 52, the first generator 531 generates a first set X1 again. That is, the first generator 531 updates the identity template information R. When updating the identity template information R, the first generator 531 generates identity template information R including a new first set X1, and replaces the identity template information R that is already recorded, with the new identity template information R.

### 3-2. Authentication Process

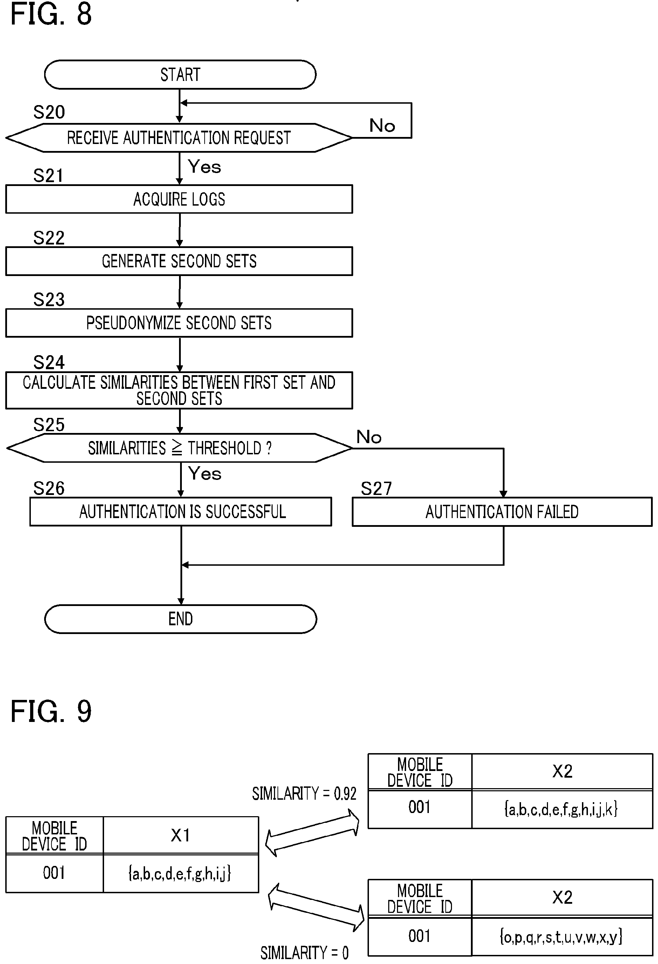

FIG. 8 is a flowchart showing an example of the authentication process by the authentication server. First, the acquirer 535 determines whether or not the communicator 51 has received an authentication request from the mobile device 10 (S20), and repeats this determination until an authentication request is received. When the communicator 51 receives an authentication request, the acquirer 535 acquires, from the storage server 40, the logs 401 of the mobile device 10 that transmitted the authentication request (S21). Specifically, the acquirer 535 transmits a log request to the storage server 40 via the communicator 51. The log request includes (i) the mobile device ID included in the authentication request, and (ii) the starting time and end time of the second period T2. The acquirer 535 receives a log response, which includes the logs 401 of the second period T2, from the storage server 40, via the communicator 51. The log response includes the logs 401 of the second period T2 corresponding to the mobile device ID.

After that, the second generator 532 generates second sets X2 based on the logs 401 acquired in step S21 (S22). The second generator 532 removes the time information from the logs 401, and generates second sets X2 that include cell IDs as elements. In addition, the second generator 532 removes the identifiers of overlapping cells 2 and generates second sets X2.

Next, the second generator 532 pseudonymizes each element of the second sets X2 (S23). Note that step S23 may be omitted.

Then, the calculator 533 reads the identity template information R of the same mobile device ID as a mobile device ID corresponding to second sets X2, from the storage part 52. The calculator 533 calculates the similarities between the first set X1 and the second sets X2 included in the identity template information R (S24). FIG. 9 is a diagram to explain the similarities between the first set X1 and second sets X2. Each element of the first set X1 and each element of the second sets X2 shown in this example are pseudonymized. The similarities shown in this example are obtained by calculation in Jaccard indices. The similarities, represented by Jaccard indices, are represented by numerical values from 0 to 1.0, where 0 (zero) is the lowest and 1.0 is the highest. In this example, the similarity between the first set X1 {a, b, c, d, e, f, g, h, i, j, k, l} and the second set X2 {a, b, c, d, e, f, g, h, i, j, k} is approximately 0.92 (=11/12). Meanwhile, the similarity between the first set X1 {a, b, c, d, e, f, g, h, i, j, k, l} and the second set X2 {o, p, q, r, s, t, u, v, w, x, y} is approximately 0 (=0/21).

Next, the authenticator 534 compares the similarities with a threshold, and determines whether these similarities are greater than or equal to the threshold (S25). If the authenticator 534 determines that the similarity is greater than or equal to the threshold (S25: Yes), the authenticator 534 determines that the authentication has been successful (S26). On the other hand, if the authenticator 534 determines that the similarity is not greater than or equal to the threshold (S25: No), the authenticator 534 determines that the authentication has failed (S27). In an example shown in FIG. 9, a case is assumed in which the threshold is set to 0.8. In the example shown in FIG. 9, if the similarity between the first set X1 {a, b, c, d, e, f, g, h, i, j, k, l} and the second set X2 {a, b, c, d, e, f, g, h, i, j, k} is approximately 0.92, this similarity is equal to or greater than the threshold. Consequently, the authenticator 534 determines that the authentication has been successful. That is, the authenticator 534 determines that the person who has sent the authentication request using the mobile device 10 of the mobile device ID "001" is the true user H of that mobile device ID "001". Meanwhile, referring to the example shown in FIG. 9, if the similarity between the first set X1 {a, b, c, d, e, f, g, h, i, j, k, l} and the second set X2 {o, p, q, r, s, t, u, v, w, x, y} is 0, this similarity is less than the threshold. Consequently, the authenticator 534 determines that the authentication has failed. That is, if the similarity is less than the threshold, the authenticator 534 determines that the person who has sent the authentication request using the mobile device ID "001" is not the true user H of the mobile device ID "001". In other words, if the similarity is less than the threshold, the authenticator 534 determines that the person who used the mobile device ID "001" to send the authentication request was a person who impersonated the user H.

The threshold can be set appropriately. The higher the threshold is, the higher the authentication strength can be made. The threshold can be set depending on service contents. For example, in the event of online banking services, the transfer service may be set with a higher threshold than the balance inquiry service. Services that require higher authentication strength may be set with higher thresholds, and services that require lower authentication strength may be set with lower thresholds, so that both enhanced security and improved convenience can be achieved. That is, services with high confidentiality may be set with higher thresholds for enhanced security, whereas services with low confidentiality may be set with lower thresholds, so that user-friendly services are realized. Therefore, the authentication server 50 can be used adequately for a variety of services. Furthermore, in step S25, the authenticator 534 may make a determination based on the result of comparing the similarity and the threshold. That is, in the above description, the authenticator 534 determines that the authentication has been successful when the similarity exceeds the threshold and when the similarity and the threshold have the same value. However, the authenticator 534 may determine that the authentication has been successful only when the similarity exceeds the threshold. After having determined whether the authentication has been a success or a failure, the authenticator 534 terminates the authentication process shown in FIG. 8.

### 3-3. Service Providing Process

When the authenticator 534 performs authentication successfully, the service provider 536 will provide services to the user H (not shown in a flow chart). If the authenticator 534 fails authentication, the service provider 536 reports to the user H that no service will be provided. Note that if the authenticator 534 fails authentication, the service provider 536 may request additional personal authentication information from the user H.

As described above, the authentication server 50 has a calculator 533 that calculates similarity, which shows how similar a second set X2 is to a first set X1, based on the first set X1 and the second set X2. As described above, the first set X1 includes, as elements, the identifiers (cell IDs) of one or more cells 2 where a mobile device 10 with a mobile device ID of "001" served during the first period T1, prior to the time the authentication request was received from this mobile device 10. The first set X1 is a set representative of the characteristics of the true user of this mobile device 10 (with the present embodiment, the true user's range of activity). As described above, the second set X2 is a set to include, as elements, the identifiers of one or more cells 2 (cell IDs) where the mobile device 10 with the mobile device ID "001" served during a second period T2, which is different from the first period T1.

With this authentication server 50, personal authentication is performed using the cell IDs of cells 2, instead of using location information of the mobile device 10 based on GPS signals, so that issues of privacy can be avoided. Furthermore, the authentication server 50 uses the first set X1 and second set X2 that include no time information, so that privacy can be protected. Therefore, by making use of the personal authentication by the authentication server 50, the user H can perform authentication procedures without worrying about privacy issues, compared to personal authentication using GPS signal-based location information. In order to derive the personal characteristics of the user H from the location information represented by latitude and longitude like GPS signals, the authentication server 50 needs to execute a heavy-load process. In contrast to this, a first set X1 and a second set X2 to include cell IDs as elements can be generated by a process with a light load on the authentication server 50. Therefore, the authentication server 50 can easily generate the first set X1 and the second set X2, and can calculate the similarity. As a consequence of this, the authentication server 50 can shorten the time to determine whether authentication has been a success or a failure. Moreover, the first set X1 is information representative of the range of activity of the true user H, and the second set X2 is information representative of the range of activity of the person subject to authentication. Consequently, sufficient accuracy of cell IDs in terms of location is obtained, for personal authentication.

The authentication server 50 performs the authentication process using the similarity between the first set X1 and the second set X2. The second set X2 is information representative of the range of activity (the tendency for movement) of the person subject to authentication. Therefore, the accuracy of authentication can be improved, compared to the case in which the authentication process is performed based on whether the identifier of the cell 2 where the mobile device 10 is located at the time of authentication is included in the first set X1, without using the second set X2. Therefore, so-called "spoofing" is reduced or prevented. Furthermore, the accuracy of personal authentication is improved.

Furthermore, the authentication server 50 has an acquirer 535 that acquires a log 401. The log 401 includes the identifiers of cells 2 where the mobile device 10 was located in the cell, and time information indicative of a time at which the mobile device 10 was located in the cell (typically, the starting times). The authentication server 50 also has a generator 530 that generates first sets X1 and second sets X2 from logs 401.

By having the generator 530, the authentication server 50 can generate first sets X1 and second sets X2 that include no time information, based on the logs 401 stored in the storage server 40.

A case is assumed in which the authentication server 50 acquires data of mobile device IDs and cell IDs corresponding to these mobile device IDs, and generates a first set X1 and a second set X2. In this case, issues of privacy can be relieved compared to a case in which the authentication server 50 acquires the log 401 itself from the storage server 40 without designating mobile device IDs.

In addition, as described above, the first set X1 includes, as elements, the identifiers of one or more different cells 2, where identifiers that overlap each other are removed. That is, when the first set X1 includes the identifiers of a number of cells 2 as elements, these identifiers of cells 2 do not overlap each other. Similarly, the second set X2 includes, as elements, the identifiers of one or more different cells 2, where overlapping ones are removed.

The first set X1 and the second set X2 each include, as elements, identifiers where overlapping ones are removed, so that it is possible to reduce the inference of the user H's address, etc., based on the frequency of stay of the user H. Therefore, protection of privacy is further improved. Also, by eliminating overlap, the amount of data of the first set X1 and the second set X2 is reduced compared to the first set X1 and the second set X2 in which overlap is not eliminated, so that it is easy to handle data.

Furthermore, as described above, the time the first period T1 ends precedes the time the second period T2 starts. Therefore, the first period T1 and the second period T2 do not overlap (see FIG. 6).

Since the first period T1 and the second period T2 do not overlap, the accuracy of authentication of the user H is improved compared to the case in which the first period T1 and the second period T2 overlap each other. When there is an overlapping part, the elements of the first set X1 and the elements of the second set X2 in the overlapping period are always the same. Consequently, overlap is likely to lead to higher similarity, and this makes it not possible to evaluate the similarity between the first set X1 and the second set X2 properly. In contrast to this, when there is no overlapping period, the similarity between the first set X1 and the second set X2 can be evaluated properly. In particular, when the similarity is generated using the Jaccard index or the Sorensen-Dice coefficient, it is possible to accurately determine how similar the first set X1 and the second set X2 are.

Also, as described earlier, it is preferable that the second period include the time an authentication request is received from the mobile device 10.

Given that authentication is performed for a user H who presently wants to have services provided, if the time of authentication is included in the second period T2, the accuracy of authentication is improved compared to the case in which the second period T2 is comprised only of a period that precedes the time of authentication.

As described above, the first period T1 is a period to precede the second period T2, and the length of the first period T1 is longer than the length of the second period T2. By making the length of the first period T1 longer than the length of the second period T2, the first set X1 can be used effectively as an identity template. If the first period T1 is shorter than the second period T2, the number of elements included in the first set X1 is smaller. In this case, even though the user H who owns the mobile device 10 at the time of authentication is the true user of the mobile device 10, the user H may not be authenticated. On the other hand, if the first period T1 is too long, it is difficult to reflect recent activity, and accuracy of authentication might decline.

As described earlier, the first set X1 and the second set X2 are each pseudonymized using a one-way function. Therefore, the identifiers of cells 2 where the mobile device 10 has served are hidden, so that the protection of privacy is enhanced. In particular, when the authentication server 50 is comprised of a number of servers, and the first set X1 or the second set X2 is communicated between servers via the network 30, pseudonymization is effective.

The first embodiment has been described above. This first embodiment may be modified in a variety of ways. Examples of specific modifications that are applicable to the above first embodiment will be illustrated below.

### First Modification

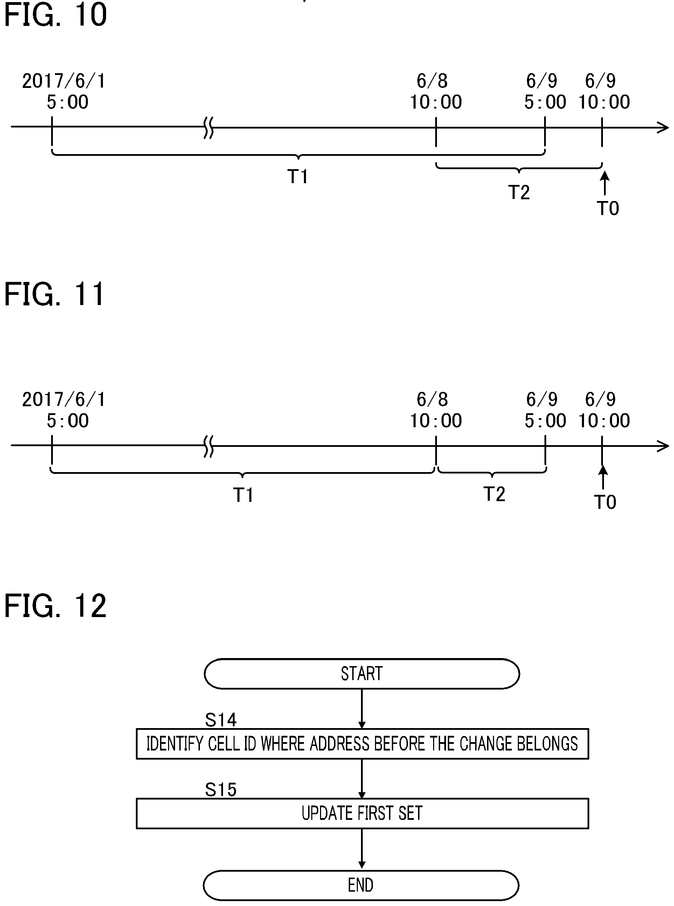

FIG. 10 is a diagram to explain a first modification of the first period and the second period. As shown in FIG. 10, the first period T1 partially overlaps the second period T2. That is, the starting point of the second period T2 shown in FIG. 10 precedes the end point of the first period T1, and the first period T1 and the second period T2 have an overlapping part. In the event these first period T1 and second period T2 are used, the authentication process can be performed by comparing their similarity with a threshold.

### Second Modification

FIG. 11 is a diagram to explain a second modification of the first period and the second period. Referring to FIG. 11, the second period T2 does not include the time T0 of authentication request. When the second period T2 does not include the time T0 of authentication request, the authenticator 534 preferably performs the authentication process based on the following (i) and (ii):
(i) the result of comparing the similarity between the first set X1 and the second set X2, with a threshold; and
(ii) the cell ID of the cell 2 where the mobile device 10 is located at the time T0 of authentication request.

For example, when the similarity is equal to or greater than a threshold, and the cell ID of the cell 2 where the mobile device 10 is located at the authentication request time T0 is included in the first set X1, the authenticator 534 determines that the authentication has been successful. If the cell ID of the serving cell 2 is not included in the first set X1, the authenticator 534 determines that the authentication has failed. Even with such an authentication process, it is possible to carry out personal authentication to be protected.

### Third Modification

In the generation process shown in FIG. 7 above, the first generator 531 may generate a number of first sets X1 for one mobile device 10. For example, the first generator 531 generates four first sets X1, where the first period T1 is one week. In addition, the first generator 531 generates four first sets X1, where the four first periods T1 have no overlapping part. For example, the first generator 531 generates four first sets X1, which correspond to four consecutive first periods T1 without overlapping each other, as information for one month.

In the authentication process shown in FIG. 8, in step S24, the calculator 533 calculates the similarity between each of the four first sets X1 and one second set X2. That is, the calculator 533 calculates four similarities. In step S25, the authenticator 534 determines whether or not the representative value (for example, the average value, the maximum value, etc.) of the four similarities is equal to or greater than a threshold. Then, when the representative value of the four similarities is equal to or greater than the threshold, the authenticator 534 determines that the authentication has been successful. According to this method of authentication, it is possible to have the history of the user H's activity reflected more accurately, compared to the method of authenticating the user H by comparing the similarity of one first set X1 with a threshold, so that the accuracy of authentication can be improved.

The authenticator 534 may, instead of comparing the representative value of four similarities with a threshold, determine whether each of the four similarities is equal to or greater than the threshold, and may determine that the authentication has been successful when all of the four similarities are equal to or higher than the threshold. According to this method of authentication, the condition for successful authentication is that all of the four similarities are greater than or equal to a threshold, so that the authentication strength is increased even more, compared to the method of authenticating the user H by comparing the above-described representative value with a threshold. In step S25, the authenticator 534 may determine that authentication has been successful if at least one of the four similarities is equal to or greater than the threshold.

### Fourth Modification

In the generation process shown in FIG. 7 above, the first generator 531 may carry out a determination step that determines whether or not to use cell IDs that have been acquired, to generate the first set X1, based on the frequency of serving, which shows how often the mobile device 10 has served cells 2. For example, this determination step takes place between step S11 and step S12. In addition, when providing this determination step, every time the first generator 531 acquires a log 401 in step S11, the first generator 531 determines the serving frequency of the mobile device 10, per cell ID, and stores these in the storage part 52.

To be more specific, when a log 401 is acquired in step S11, the first generator 531 determines whether this cell ID is stored in the storage part 52, and if the cell ID is stored, the first generator 531 refers to the frequency with which the mobile device 10 has served that cell 2. For example, if the frequency of serving is equal to or higher than a predetermined value, the first generator 531 determines to use that cell ID to generate the first set X1. The predetermined value is set appropriately.

Since the determination step is carried out by the first generator 531, the first set X1, from which activity that is different from the usual activity of the user H is removed, is generated as an identity template. Therefore, by using this first set X1, the accuracy of authentication in the authentication process is improved, compared to the case in which the first set X1 to include all the cell IDs that have been acquired, as elements, is used. In addition, in this determination step, the serving time (duration of staying in cells) may be referenced in addition to the frequency of serving. In this case, every time a log 401 is acquired in step S11, the first generator 531 determines the serving time (for example, when the cell ID is switched to another cell ID, the difference of the serving starting time before and after the switch) and stores this in the storage part 52.

### Fifth Modification

FIG. 12 is a flowchart to show the first set updating process in the event the address of the user H is changed. The first generator 531 may generate the first set X1 by using address information of the user H. The user H reports the address information, which includes the changed address, to the authentication server 50 by operating the mobile device 10. Alternatively, if a subscriber's address information changes, a notice of change may be transmitted from the management server (not shown) that manages subscriber information including address information of the mobile device 10, to the authentication server 50. The notice of change includes address information including the changed address and the mobile device ID. The management server registers and manages the address information showing the address of the user H, who is a subscriber of radio communication services.

First, when address information is provided to the communicator 51 from external apparatus such as a mobile device 10 or the management server, the first generator 531 identifies the cell ID where the acquired address of the user H before the changing belongs, from the first set X1 (S14). After that, the first generator 531 removes the specified cell ID from the first set X1, and updates the first set X1 (S15). Then, the first generator 531 generates identity template information R, in which the mobile device ID is associated with the first set X1, and stores this in the storage part 52.

That is, in the radio communication services to which the user H of the mobile device 10 subscribes, address information to show the user H's address is registered with the management server, and the acquirer 535 acquires the address information from the management server. If the address information acquired by the acquirer 535 is different from the address information acquired by the acquirer 535 earlier, the first generator 531 removes the cell ID related to the earlier address information (cell ID corresponding to the earlier address information) from the first set X1. The authentication server 50 has information, in which cell IDs and address information are associated with each other, stored in the storage part 52. The authentication server 50 identifies the cell IDs to correspond to address information by using this information.

According to this modification, when an address is changed, the cell ID related to the earlier address information will be removed, so that the accuracy of authentication of the user H after the change of address is improved compared to the case in which the cell ID related to the earlier address information is not removed.

It is preferable to remove not only the cell ID, to which the address before the change of address belongs, but also all the cell IDs where the user H visited before the change of address. Generally speaking, a second set X2 to show the range of activity after the change of address is unlikely to include the cell IDs corresponding to places where the user H would often visit before the change of address. Therefore, if these cell IDs are included in the first set X1, the similarity between them decreases, and there is a high probability that authentication will fail. By removing these cell IDs, the accuracy of authentication of the user H after the change of the user H's address can be further improved.

### Sixth Modification

The "authentication apparatus" may be applied not only to the authentication server 50, but also to a mobile device 10, for example. In that case, the mobile device 10 includes a communicator 51, a storage part 52, a generator 530, a calculator 533, an authenticator 534, and an acquirer 535. This mobile device 10 also has an authentication function for logging in to some service. Then, when authentication is successful, the mobile device 10 can have that service provided. The mobile device 10 can have the cell IDs, so it is possible to store the cell IDs of serving cells 2 in the storage part 52, and generate first sets X1 and second sets X2 based on the cell IDs stored. Alternatively, logs 401 may be acquired from the storage server 40.

### Second Embodiment

The authentication server 50 of the first embodiment described above stores an identity template, which shows the characteristics of activity during the first period T1 (first set X1), in advance, for each user that is subject to authentication. Upon receiving an authentication request, the authentication server 50 extracts one first set X1 associated with the mobile device ID of the mobile device 10 that transmitted the authentication request, amongst the first sets X1 stored in advance. Then, the authentication server 50 calculates the similarity between the one first set X1 extracted, and one second set X2 generated with respect to the mobile device 10 that transmitted the authentication request. The authentication server 50 authenticates whether the person who owns the mobile device 10 that transmitted the authentication request is the true user H, based on the calculated similarity. That is, with the first embodiment, one-to-one authentication is executed based on the similarity between one first set X1 and one second set X2.

In contrast to this, with the second embodiment, the similarities between (i) a number of first sets X1 generated with respect to a number of users and (ii) one second set X2 generated with respect to the mobile device ID of the mobile device 10 that has transmitted an authentication request is calculated per first set X1, and the individual identification process is performed based on the calculated similarities. That is, the second embodiment is different from the first embodiment in performing 1-to-N authentication. This 1-to-N authentication is an individual identification process to identify which one of a number of users a user corresponds to, or whether the user does not correspond to any of these users. In the second embodiment, after the individual identification process is executed, the authentication process is executed to authenticate the user identified by the individual identification process. Note that the second embodiment shares in common, with the first embodiment, generating an identity template that shows the characteristics of activity during the first period T1 (first set X1), in advance, for each of a number of users.

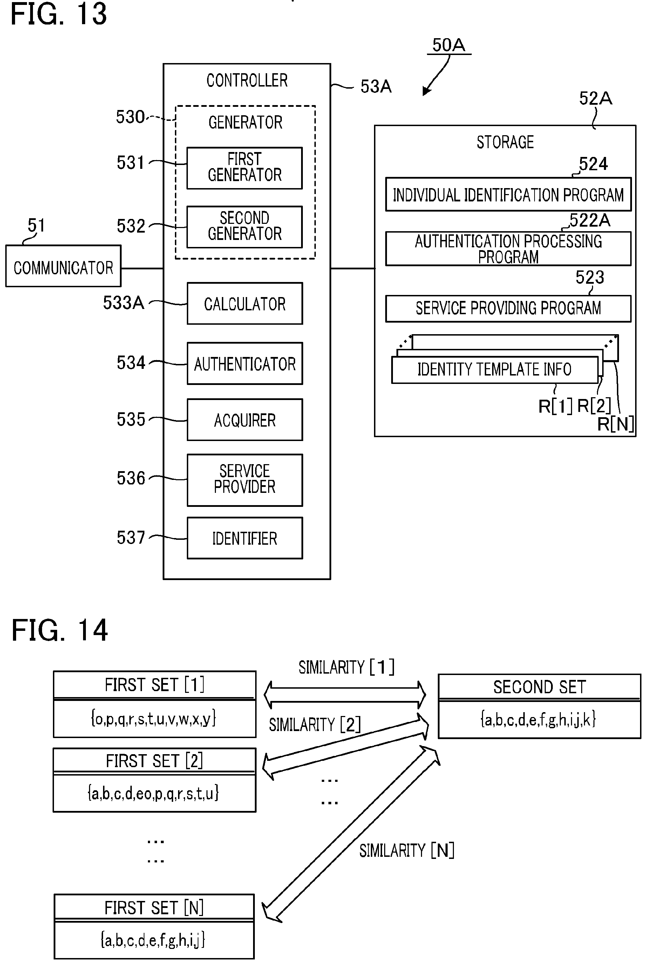

The system 100 according to the second embodiment is similar to the system 100 of the first embodiment shown in FIG. 1, except that the authentication server 50A is used instead of the authentication server 50. In the following description, the second embodiment will be described with a focus on differences from the first embodiment described above, and the description of the same matters will be omitted. In addition, although the following description will be given with reference to FIG. 13 to FIG. 15, in these drawings, the same components as those in the first embodiment described above will be assigned the same reference numerals. The above-described first, second, third, fourth, and fifth modifications may be applied to this embodiment as well.

FIG. 13 is a block diagram to show a functional structure of an authentication server 50A, according to the second embodiment. FIG. 14 is a diagram to explain individual identification based on similarity.

The authentication server 50A shown in FIG. 13 not only provides authentication and services, but also performs individual identification for identifying the person who owns the mobile device 10 at the time of authentication. The storage part 52 of the authentication server 50A stores an individual identification program 524 and an authentication processing program 522A. The controller 53A of the authentication server 50A functions as a second generator 532, a calculator 533 and an identifier 537 by reading and executing the individual identification program 524. Also, the controller 53A functions as an authenticator 534 by reading and executing the authentication processing program 522A.

The first generator 531 generates a first set X1 for each of a number of mobile devices 10. To be more specific, the first generator 531 uses the cell IDs of one or more cells 2 where each mobile device 10 was located during the first period T1 as elements to generate a first set X1, which is representative of the characteristics this mobile device 10's true user, per mobile device 10. The first generator 531 stores a number of pieces of identity template information R, in which mobile device IDs and first sets X1 are associated with each other, in the storage part 52. In the example shown in FIG. 13, the number of users is N (where N is a natural number of two or more), and N pieces of identity template information R[1] to R[N] are stored in the storage part 52A.

The second generator 532 generates a second set X2, which includes, as elements, the cell IDs of one or more cells 2 where a specific mobile device 10 is located during a second period T2, which is different from the first period T1. The specific mobile device 10 is the mobile device 10 that transmitted the authentication request.

Based on a number of first sets X1 and one second set X2, the calculator 533A calculates, per mobile device 10, the similarity to show how similar the second set X2 is to the first sets X1. To be more specific, the calculator 533A calculates the similarity [1] to similarity [N] between each of the N first sets X1[1] to X1[N] and one second set X2, as shown in FIG. 14.

The identifier 537 identifies the person who owns the mobile device 10 at the time of authentication request. To be more specific, the identifier 537 identifies, based on the similarity calculated for each of the N mobile devices 10 in the calculator 533A, which one of the users of the N mobile devices 10 is the person who owned the specific mobile device 10 during the second period T2. When the identifier 537 performs the individual identification, the authenticator 534 determines whether the authentication is a success or a failure based on that result. That is, the authentication server 50A performs 1-to-N authentication.

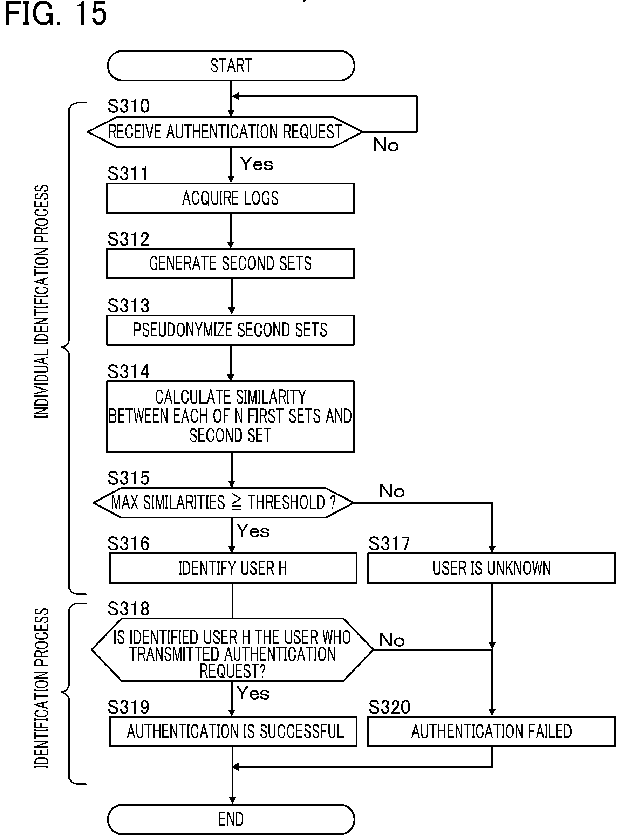

FIG. 15 is a flowchart to show examples of the individual identification process and the authentication process. The process from step S310 to step S317 is the individual identification process, and the process from step S317 to step S320 is the authentication process.

In the individual identification process, the process from step S310 to step S313 is the same as the process from step S20 to step S23 described with reference to FIG. 8 in the first embodiment, and therefore, description thereof will be omitted.

In step S314, the calculator 533A calculates the similarity between each of N first sets X1 and a second set X2. To be more specific, the calculator 533A reads the identity template information R[1] to R[N] from the storage part 52A to acquire N first sets X1, and calculates their similarities with a second set X2.

Next, the identifier 537 determines whether or not the maximum similarity among the N similarities calculated is equal to or greater than a threshold (S315). If the maximum similarity is equal to or greater than the threshold and the result of judgment in step S315 is positive, the identifier 537 identifies the user H having the mobile device ID associated with the first set X1 from which the maximum similarity was calculated (S316). On the other hand, if the maximum similarity is less than the threshold and the result of determination in step S315 is negative, the identifier 537 determines that the user is unknown(S317).

In step S317, the maximum similarity is compared with a threshold, because the person who carries the mobile device 10 that transmitted the authentication request is likely to correspond to the user H who is subject to authentication. According to the above individual identification process, it is possible to identify whether the person who carries the mobile device 10 that has transmitted the authentication request corresponds to any of the N users H who are subject to authentication, or does not correspond to any of these N users H. The user H may be identified by comparing a predetermined number of top similarities among the similarities with a threshold. As a result of this comparison, when there are a number of similarities that exceed the threshold, a number of users H are identified. In this case, the authentication process is executed for each user H.

Next, in the authentication process, the authenticator 534 determines whether or not the user H identified in step S316 is the user H who transmitted the authentication request (S318). To be more specific, the authenticator 534 determines whether or not the mobile device ID included in the authentication request and the mobile device ID of the mobile device 10 owned by the user identified in step S316 match.

If these mobile device IDs match, the result of determination in step S318 is positive, so that the authenticator 534 determines that the authentication has been successful. On the other hand, if the mobile device IDs do not match, or if no user H can be specified in step S317, the authenticator 320 determines that the authentication has failed.

Furthermore, although not shown in a flow chart, if the service provider 536 determines that the authentication in the authenticator 534 has been successful, the service provider 536 will provide services to the user H, and if the service provider 536 determines that the authenticator 534 has failed, the service provider 536 will report to the user H that no service will be provided.

As explained above, the authentication server 50A has a calculator 533A and an identifier 537. The calculator 533A calculates, based on a first set X1 and a second set X2, similarity indicative of how similar the second set X2 is to the first set X1, per mobile device 10. The first set X1 is generated for each of a number of mobile devices 10, and includes, as elements, the identifiers (cell IDs) of one or more cells where the mobile device 10 was located during the first period T1. The first set X1 shows the characteristics of the true user of this mobile device 10. The second set X2 includes, as elements, the identifiers (cell IDs) of one or more cells where a specific mobile device 10 was located during a second period T2, which is different from the first period T1. The identifier 537 identifies which of the users of the mobile devices 10 is the person who carries the specific mobile device 10 during the second period T2, based on the similarities calculated per mobile device 10 in the calculator 533A.

The authentication server 50A also performs individual identification using the identifiers of cells 2, instead of location information of the mobile devices 10, which is based on GPS signals, so that enhanced privacy protection is achieved. Furthermore, each element of the first set X1 and the second set X2 is a cell identifier, so that no time information is included. Therefore, even if the user's range of activity is estimated, the details of the activity cannot be identified. Therefore, although the first set X1 and the second set X2 are information to show the user's characteristics, the user's privacy is protected, by using the first set X1 and the second set X2. In addition, when using cell identifiers, unlike the case of using GPS signals that show locations in latitude and longitude, there is no need to extract the user's characteristics by analyzing location information, and in addition, the amount of data is small. Therefore, the processing load of the authentication server 50A is reduced.

In the present embodiment, an example case is described in which the authentication server 50A performs an individual identification process, authenticates the user H using the result thereof, and provides services to the user H. The authentication server 50A may perform the individual identification process alone. The individual identification process may be used for other purposes, or may be used only to identify individuals.

In the above description, the identifier 537 determines whether the maximum similarity is equal to or greater than a threshold. When it is clear that the person who carries the mobile device 10 that has transmitted an authentication request is among the users subject to authentication, the comparison between the maximum similarity and a threshold may be omitted.

According to the second embodiment as described above, it is possible to provide an example of individual identification apparatus that protects privacy and uses limited location information.

### Third Embodiment

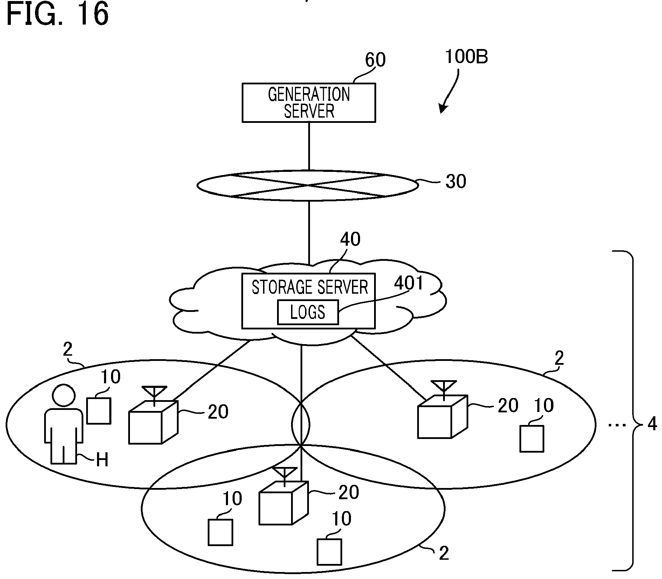

Next, a third embodiment of the present invention will be described. A system 100B according to the present embodiment is the same as the system 100 of the first embodiment, except that a generation server 60 is used instead of the authentication server 50. In the following description, the third embodiment will be described with a focus on differences from the first embodiment described above, and the description of the same matters will be omitted. In addition, the following description will be given with reference to FIG. 16 to FIG. 18, in these drawings. The same components as those of the above-described embodiments will be assigned the same reference numerals. The above-described first, second, third, fourth, and fifth modifications may be applied to this embodiment as well.

FIG. 16 is a diagram to show a structure of a system with a generation server according to the third embodiment. The system 100B has a generation server 60. The generation server 60 is information processing apparatus that calculates the similarity between first sets X1 and second sets X2. In the present embodiment, the generation server 60 evaluates the characteristics of the user H based on similarity. When the generation server 60 receives an evaluation request from an external apparatus, such as a mobile device 10 or other servers, the generation server 60 evaluates the characteristics of the user H based on similarity, and transmits an evaluation response including the evaluation result to the external apparatus. By referring to the evaluation result, the external apparatus can know, for example, changes in the activity of the user H, changes in lifestyle, and so forth.

The generation server 60 is a computer device to include a processor 1001, a memory 1002, a storage 1003, a communication apparatus 1004, an input apparatus 1005, an output apparatus 1006, a bus 1007, etc., as shown in FIG. 19.

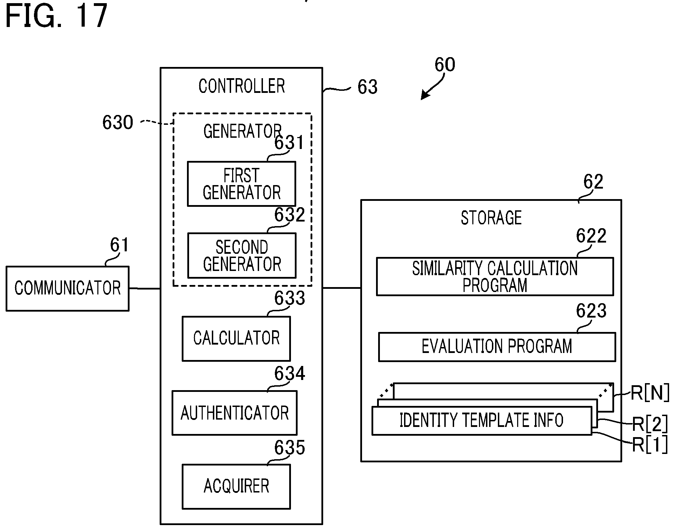

FIG. 17 is a block diagram to show a functional structure of the generation server 60. As shown in FIG. 17, the generation server 60 has a communicator 61, a storage part 62 and a controller 63.

The communicator 61 has the same functions as the communicator 51 according to the first embodiment. The storage part 62 has the same functions as the storage part 52 according to the first embodiment, and stores a variety of programs and a variety of data. The storage part 62 has a similarity calculation program 622, an evaluation program 623, and identity template information R[1] to R[N] stored therein. The similarity calculation program 622 is a program for calculating similarity, and the evaluation program 623 is a program for evaluating the activity of the user H.

The controller 63 performs a variety of processes and controls each part included in the generation server 60. The controller 63 has a generator 630 having a first generator 631 and a second generator 632, a calculator 633, an evaluator 634, and an acquirer 635. The generator 630 is the same as the generator 530 of the first embodiment. The calculator 633 is the same as the calculator 533 of the first embodiment. The controller 63 functions as the generator 630, the calculator 633, and the acquirer 635 by reading and executing the similarity calculation program 622. The controller 63 also functions as the evaluator 634 by reading and executing the evaluation program 623.

FIG. 18 is a flowchart to show the similarity calculation process by the generation server 60. Step S41 to step S44 in the process shown in FIG. 18 are the same as step S21 to step S24 in the authentication process by the authentication server 50 described in the first embodiment (see FIG. 8).

First, the acquirer 535 determines whether the communicator 61 has received an evaluation request from external apparatus (S40), and repeats this determination until an evaluation request is received. The evaluation request includes a mobile device ID that identifies a mobile device 10 to be evaluated. When the communicator 61 receives an evaluation request, the acquirer 535 acquires the log 401 of the mobile device ID, included in the evaluation request, from the storage server 40 (S41). Also, the second generator 632 generates a second set X2 based on the log 401 (S42), and furthermore, pseudonymizes the elements of the second set X2 (S43). After that, the calculator 633 calculates the similarity between the first set X1 and the second set X2 (S44).

In step S45, the evaluator 634 evaluates the similarity. For example, the evaluator 634 evaluates changes in the activity of the user H, changes in lifestyle, and so forth, based on differences between the present similarity and similarities calculated earlier (that is, changes in similarity over time). As described above, the first set X1 shows the range of activity of the user H during the first period T1. Meanwhile, the second set X2 shows the range of activity of the user H during the second period T2. For example, if the similarity changes from high to low, this means that the range of activity has changed, and so the evaluator 634 evaluates that the activity of the user H has changed significantly.

As described above, the generation server 60 has a generator 630 that generates a first set X1 and a second set X2, and a calculator 633 that calculates similarity indicative of how similar the second set X2 is to the first set X1. The first set X includes, as elements, the identifiers of one or more cells 2 where the mobile device 10 was located during the first period T1, and shows the characteristics of the true user of the mobile device 10. The second set X2 includes, as elements, the identifiers of one or more cells 2 where the mobile device 10 was located during a second period T2, which is different from the first period T1. The generation server 60 is an example of "information processing apparatus" that has a generator 630 and a calculator 633.

The authentication server 60 also performs individual identification using the identifiers of cells 2, instead of location information of the mobile device 10, which is based on GPS signals, so that enhanced privacy protection is achieved. Furthermore, each element of the first set X1 and second set X2 is a cell identifier, so that no time information is included. Therefore, even if the user's range of activity can be estimated, the details of activity cannot be identified. Therefore, although the first set X1 and the second set X2 are information to show the user's characteristics, the user's privacy is protected, by using the first set X1 and the second set X2. In addition, when using cell identifiers, unlike the case of using GPS signals representative of locations in latitude and longitude, there is no need to extract users' characteristics by analyzing location information. Furthermore, the amount of data is small. Therefore, the processing load of the authentication server 60 is reduced. According to the third embodiment described above, it is possible to provide an example of an information processing apparatus that protects privacy and uses limited location information.

### Hardware Structure

The block diagrams that have been used to describe the above embodiments show blocks in functional units. These functional blocks (components) may be implemented in freely selected combinations of hardware and/or software. The means for implementing each functional block is not particularly limited. That is, each functional block may be implemented by one piece of apparatus that is physically and/or logically aggregated. Alternatively, each functional block may be realized by directly and/or indirectly connecting two or more physically and/or logically separate pieces of apparatus (by using cables and/or radio, for example), and using these pieces of apparatus.

FIG. 19 is a diagram to show an example of a hardware structure of a mobile device 10, a base station 20, a storage server 40, authentication servers 50 and 50A, and a generation server 60, according to an embodiment of the present invention. Physically, the above-described mobile device 10, base station 20, storage server 40, authentication servers 50 and 50A, and generation server 60 may be formed as computer apparatus that includes a processor 1001, a memory 1002, a storage 1003, communication apparatus 1004, input apparatus 1005, output apparatus 1006, a bus 1007, etc. In the following description, the term "apparatus" may be replaced by "circuit", "device", "unit", etc. The hardware structure of the base station 20, mobile device 10, storage server 40, and authentication servers 50 and 50A may be designed so as to include one or more of the apparatus shown in the drawings, or may be designed not to include part of the apparatus.

Each function of the radio base station 10, base station 20, storage server 40, authentication servers 50 and 50A, and generation server 60 is implemented by reading predetermined software (program) on hardware such as the processor 1001 and the memory 1002, and by allowing the processor 1001 to do calculations and control the communication in the communication apparatus 1004, and the reading and/or writing of data in the memory 1002 and the storage 1003.

The processor 1001 may control the entire computer by, for example, running an operating system. The processor 1001 may be constituted of a central processing unit (CPU), which includes interfaces with peripheral apparatus, control apparatus, computing apparatus, a register, etc.

Furthermore, the processor 1001 reads programs (program codes), software modules, data, etc., from the storage 1003 and/or the communication apparatus 1004, into the memory 1002, and executes a variety of processes according to these. As for the programs, programs to allow computers to execute at least part of the operations of the above-described embodiments may be used. For example, the controller 53 of the authentication server 50 may be implemented by control programs that are stored in the memory 1002 and run on the processor 1001, and other functional blocks may be similarly implemented. Although a variety of processes have been described above as being implemented by one processor 1001, these processes may be implemented simultaneously or in sequence by two or more processors 1001. The processor 1001 may be implemented by one or more chips. Note that the programs may be transmitted from the network via a telecommunications line.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and so forth. The memory 1002 may be referred to as a "register", a "cache", a "main memory" (primary storage apparatus), etc. The memory 1002 can store programs (program codes), software modules and so forth that can be executed to implement the radio communication methods according to one embodiment of the present invention.

The storage 1003 is a computer-readable recording medium, and may be constituted by, for example, at least one of an optical disk such as a compact disc ROM (CD-ROM), a hard disk drive, a flexible disk, a magnetooptical disk (for example, a compact disc, a digital versatile disc, a Blu-ray (registered trademark) disk, etc.), a smart card, a flash memory (for example, a card, a stick, a key drive, etc.), a floppy disk (registered trademark), a magnetic stripe, etc. The storage 1003 may be referred to as "secondary storage apparatus". The storage medium described above may be, for example, a database, a server, or any other appropriate medium that includes the memory 1002 and/or the storage 1003.

The communication apparatus 1004 is a piece of hardware (transmitting/receiving device) for allowing inter-computer communication via cables and/or wireless networks, and may be referred to as, for example, a "network device", a "network controller", a "network card", a "communication module", etc.

The input apparatus 1005 is an input apparatus for receiving input from the outside (for example, a keyboard, a mouse, a microphone, a switch, a button, a sensor, etc.). The output apparatus 1006 is output apparatus for allowing output to outside (for example, a display, a speaker, an LED lamp, etc.). Note that the input apparatus 1005 and the output apparatus 1006 may be provided in an integrated structure (for example, a touch panel).

Furthermore, these pieces of apparatus, including the processor 1001, the memory 1002, etc., are connected by the bus 1007, which is for communicating information. The bus 1007 may be formed of a single bus, or may be formed of buses that vary between pieces of apparatus.

The mobile station 10, the base station 20, the storage server 40, the authentication servers 50 and 50A, and the generation server 60 may be each structured to include pieces of hardware such as a microprocessor, a digital signal processor (DSP), an application-specific integrated circuit (ASIC), a programmable logic device (PLD), a field programmable gate array (FPGA), etc., and part or all of the functional blocks may be implemented by these pieces of hardware. For example, the processor 1001 may be implemented by at least one of these pieces of hardware.

### Other Matters

The method of reporting information is by no means limited to the examples/embodiments described in this specification, and other methods may be used as well. For example, reporting of information may be implemented by using physical layer signaling (for example, downlink control information (DCI), uplink control information (UCI), etc.), higher layer signaling (for example, radio resource control (RRC) signaling, medium access control (MAC) signaling, broadcast information (master information block (MIB), system information block (SIB)), etc.), and other signals and/or combinations of these. Also, RRC signaling may be referred to as an "RRC message", and may be, for example, an "RRC connection setup message", "RRC connection reconfiguration message", etc.

Each example and embodiment described in this specification may be applied to systems that use long term evolution (LTE), LTE-advanced (LTE-A), SUPER 3G, IMT-advanced, 4G, 5G, future radio access (FRA), W-CDMA (registered trademark), GSM (registered trademark), CDMA 2000, ultra-mobile broadband (UMB), and other adequate systems, and/or to next-generation systems that are enhanced based on these.

The order of processes, sequences, flowcharts, etc., that have been used to describe the examples and embodiments in this specification may be changed as long as they do not conflict. For example, although a variety of methods have been illustrated in this specification with a variety of elements of steps in exemplary orders, the specific orders presented herein are by no means limiting.

Certain actions that have been described in this specification to be performed by base stations may, in some cases, be performed by their upper nodes. In a network comprised of one or more network nodes with base stations, it is clear that a variety of operations that are performed to communicate with terminals can be carried out by base stations and/or other network nodes other than base stations (for example, MME, S-GW, etc., may be possible, but these are not limiting). The case in which there is one network node other than base stations has been described above, but a combination of other network nodes (for example, MME and S-GW) may be used.

Information, etc., may be output from a higher layer (or a lower layer) to a lower layer (or a higher layer). Information, etc., may be input and/or output via network nodes.

The information, etc., that is input and/or output may be stored in a specific location (for example, a memory), or may be managed using a control table. The information, etc., that is input and/or output may be overwritten, updated, or appended. The information, etc., that is output may be deleted. The information, etc., that is input may be transmitted to other pieces of apparatus.

Decisions may be made in values that can be represented by one bit (0 or 1), may be made in Boolean values (true or false), or may be made by comparing numerical values (for example, comparison against a predetermined value).

The examples and embodiments illustrated in this specification may be used individually or in combinations, which may be switched depending on the mode of implementation. A predetermined piece of information (for example, a report to the effect that something is "X") does not necessarily have to be indicated explicitly, and may be indicated in an implicit way (for example, by not reporting this predetermined piece of information, by reporting another piece of information, etc.).

Software, whether referred to as "software", "firmware", "middleware", "microcode", or "hardware description language", or called by other names, should be interpreted broadly to mean instructions, instruction sets, code, code segments, program codes, programs, subprograms, software modules, applications, software applications, software packages, routines, subroutines, objects, executable files, execution threads, procedures, functions, etc.

Software, instructions and so forth may be transmitted and received via communication media. For example, when software is transmitted from a website, a server, or other remote sources, by using wired technologies such as coaxial cables, optical fiber cables, twisted-pair cables, and digital subscriber lines (DSL), and/or wireless technologies such as infrared radiation, radio and microwaves, etc., these wired technologies and/or wireless technologies are also included in the definition of communication media.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or in any combination of these.

The terminology used in this specification and the terminology that is needed to understand this specification may be replaced by other terms that have the same or similar meanings. For example, a "channel" and/or a "symbol" may be replaced by a "signal". A signal may be a message. Furthermore, a "component carrier (CC)" may be referred to as a "carrier frequency", a "cell", etc.

The terms "system" and "network" as used in this specification are used interchangeably.

The information and parameters described in this specification may be represented by absolute values, may be represented by relative values with respect to predetermined values, or may be represented by using other pieces of applicable information. For example, radio resources may be specified by predetermined indices.

The names used for parameters in this specification are in no respect limiting. In addition, equations and/or the like to use these parameters may be used other than those explicitly disclosed in this specification. For example, since a variety of channels (for example, PUCCH, PDCCH, etc.) and information elements (for example, TPC) can be identified by any suitable names, a variety of names to assign to these various channels and information elements are in no respect limiting.

Abase station can accommodate one or more (for example, three) cells (also referred to as "sectors"). When a base station accommodates a number of cells, the entire coverage area of the base station can be partitioned into a number of smaller areas, and each smaller area can provide communication services through base station subsystems (for example, indoor small base stations (remote radio heads (RRHs))). The term "cell" or "sector" refers to part or all of the coverage area of a base station and/or a base station subsystem that provides communication services in this coverage. Furthermore, as used in this specification, the terms "base station", "eNB", "cell", and "sector" may be used interchangeably. A base station may be referred to as a "fixed station", a "NodeB", an "eNodeB (eNB)", an "access point", a "femto cell", a "small cell", etc.

A mobile station (mobile device) may be referred to, by a skilled person, as a "subscriber station", a "mobile unit", a "subscriber unit", a "wireless unit", a "remote unit", a "mobile device", a "wireless device", a "wireless communication device", a "remote device", a "mobile subscriber station", a "access terminal", a "mobile terminal", a "wireless terminal", a "remote terminal", a "handset", a "user agent", a "mobile client", a "client", or some other suitable terms.

The term "determining" as used in this specification may encompass a wide variety of actions. For example, the term "determining" may be used when practically "determining" that some act of calculating, computing, processing, deriving, investigating, looking up (for example, looking up a table, a database, or some other data structure), ascertaining and so forth has taken place. Furthermore, "determining" may be used when practically "determining" that some act of receiving (for example, receiving information), transmitting (for example, transmitting information), inputting, outputting, accessing (for example, accessing data in a memory) and so forth has taken place. In addition, "determining" may be used when practically "determining" that some act of resolving, selecting, choosing, establishing, comparing, and so forth has taken place. That is, "determining" may be used when practically determining to take some action.

The terms "connected" and "coupled", or any modification of these terms, might mean all direct or indirect connections or coupling between two or more elements, and may include the presence of one or more intermediate elements between two elements that are "connected" or "coupled" to each other. The coupling or connection between the elements may be physical, logical, or a combination of these. As used in this specification, two elements may be considered "connected" or "coupled" to each other by using one or more electrical wires, cables and/or printed electrical connections, and to name a number of non-limiting and non-inclusive examples, by using electromagnetic energy, such as electromagnetic energy having wavelengths in radio frequency regions, microwave regions and optical (both visible and invisible) regions.

The phrase "based on" as used in this specification does not mean "based only on", unless specified otherwise. In other words, the phrase "based on" means both "based only on" and "based at least on".

Reference to elements with designations such as "first", "second", etc., as used in this specification does not generally limit the number/quantity or order of these elements. These designations may be used, in this specification, only for convenience, as a method for distinguishing between two or more elements. It then follows that reference to the first and second elements does not imply that only two elements may be employed there, or that the first element must precede the second element in some way.

As long as terms such as "include", "comprise" and modifications of these are used in this specification or in claims, these terms are intended to be inclusive, in a manner similar to the way the term "provide" is used. Furthermore, the term "or" as used in this specification or in claims is intended not to be an exclusive disjunction.

Throughout this application, when articles such as, for example, "a", "an" and "the" are added in the English translation, these articles may also indicate plural forms of words, unless the context clearly indicates otherwise.

It should be obvious to one skilled in the art that the present invention is by no means limited to the embodiments described in this specification. The present disclosure can be implemented with a variety of corrections and in a variety of modifications, without departing from the scope of the present invention defined by the appended claims. Consequently, the description in this specification is provided only for the purpose of explaining examples, and should by no means be construed to limit the present invention in any way. Also, configurations selected from the examples and the modifications illustrated in this specifications as examples may be combined.

### Description of Reference Signs

2 ... cell, 10 ... mobile device, 320 ... authenticator, 401 ... log, 530, 630 ... generator, 533A, 633 ... calculator, 534 ... authenticator, 535, 635 ... acquirer, 537 ... identifier, T1 ... first period, T2 ... second period, X1 ... first set, X2 ... second set.

## Claims

1. An authentication apparatus (50, 50A, 60) comprising:
a calculator (533, 533A, 633) configured to calculate, based on a first set and a second set, a similarity indicative of how similar the second set is to the first set, wherein:
the first set is representative of characteristics of a true user of a mobile device and has as elements identifiers of one or more cells where the mobile device was located during a first period of time previous to a time at which an authentication request was received; and
the second set has as elements identifiers of one or more cells where the mobile device was located during a second period of time differing from the first period; and
an authenticator (534, 634) configured to, based on the similarity, authenticate a person who carries the mobile device during the second period as a true user.

2. The authentication apparatus (50, 50A, 60) according to claim 1, wherein the first set and the second set each include, as elements, identifiers of one or more different cells obtained by removing identifiers that overlap each other.

3. The authentication apparatus (50, 50A, 60) according to claim 1 or 2, further comprising:
an acquirer (535, 635) configured to acquire a log that includes an identifier of a cell where the mobile device was located and time information indicative of a time at which the mobile device was located in the cell; and
a generator (530, 630) configured to generate the first set and the second set from the log.

4. The authentication apparatus (50, 50A, 60) according to claim 3, wherein:
in a radio communication service to which a user of the mobile device subscribes, address information indicative of an address of the user is registered;
the acquirer (535, 635) acquires the address information; and
when the address information acquired by the acquirer (535, 635) is different from address information acquired by the acquirer (535, 635) previously, the generator (530, 630) removes from the first set the identifier of the cell relating to the earlier address information.

5. The authentication apparatus (50, 50A, 60) according to any one of claims 1 to 4, wherein an end time of the first period precedes a start time of the second period.

6. The authentication apparatus (50, 50A, 60) according to any one of claims 1 to 5, wherein the second period includes the time at which the authentication request was received from the mobile device.

7. The authentication apparatus (50, 50A, 60) according to any one of claims 1 to 6, wherein each of one or more elements belonging to the first set and each of one or more elements belonging to the second set are pseudonymized using a one-way function.

8. The authentication apparatus (50, 50A, 60) according to any one of claims 1 to 7, wherein:
the authenticator (534, 634) authenticates the true user based on a result of comparison between the similarity and a threshold; and
the threshold is set based on content of a service to be provided to the true user when the true user is authenticated.

9. The authentication apparatus (50A) according to claim 1, wherein:
the calculator (533A) is configured to calculate the similarity for each of a plurality of mobile devices, based on a first set generated for each of the plurality of mobile devices and the second set;
the authenticator (534) is configured to identify, as part of the authentication, which users of the plurality of mobile devices is a person who carried the mobile device during the second period, based on the similarity calculated for each mobile device in the calculator (533A).

10. The authentication apparatus (50, 50A, 60) according to claim 1, further comprising:
a generator (530, 630) configured to generate the first set and the second set.

## Patentansprüche

1. Authentifizierungsvorrichtung (50, 50A, 60), umfassend:
einen Rechner (533, 533A, 633), der so konfiguriert ist, dass er auf der Grundlage eines ersten Satzes und eines zweiten Satzes eine Ähnlichkeit berechnet, die anzeigt, wie ähnlich der zweite Satz dem ersten Satz ist, wobei:
der erste Satz repräsentativ für Merkmale eines echten Benutzers einer mobilen Vorrichtung ist und als Elemente Kennungen von einer oder mehreren Zellen aufweist, in denen sich die mobile Vorrichtung während einer ersten Zeitspanne vor einem Zeitpunkt befand, zu dem eine Authentifizierungsanforderung empfangen wurde; und
der zweite Satz als Elemente Kennungen von einer oder mehreren Zellen aufweist, in denen sich die mobile Vorrichtung während einer zweiten Zeitspanne befand, die sich von der ersten Zeitspanne unterscheidet; und einen Authentifikator (534, 634), der so konfiguriert ist, dass er auf der Grundlage der Ähnlichkeit eine Person, die die mobile Vorrichtung während der zweiten Zeitspanne trägt, als einen echten Nutzer authentifiziert.

2. Authentifizierungsvorrichtung (50, 50A, 60) nach Anspruch 1, wobei der erste Satz und der zweite Satz jeweils als Elemente Kennungen einer oder mehrerer unterschiedlicher Zellen beinhalten, die durch Entfernen sich überschneidender Kennungen erhalten werden.

3. Authentifizierungsvorrichtung (50, 50A, 60) nach Anspruch 1 oder 2, weiter umfassend:
eine Erfassungseinrichtung (535, 635), die so konfiguriert ist, dass sie ein Protokoll erfasst, das eine Kennung einer Zelle, in der sich die mobile Vorrichtung befand, und Zeitinformationen beinhaltet, die eine Zeit angeben, zu der sich die mobile Vorrichtung in der Zelle befand; und
einen Generator (530, 630), der so konfiguriert ist, dass er den ersten Satz und den zweiten Satz aus dem Protokoll generiert.

4. Authentifizierungsvorrichtung (50, 50A, 60) nach Anspruch 3, wobei:
in einem Funkkommunikationsdienst, den ein Nutzer der mobilen Vorrichtung abonniert hat, Adressinformationen, die eine Adresse des Nutzers anzeigen, registriert werden;
die Erfassungseinrichtung (535, 635) die Adressinformationen erfasst; und
wenn die von der Erfassungseinrichtung (535, 635) erfassten Adressinformationen sich von zuvor von der Erfassungseinrichtung (535, 635) erfassten Adressinformationen unterscheiden, der Generator (530, 630) aus dem ersten Satz die Kennung der Zelle entfernt, die sich auf die früheren Adressinformationen bezieht.

5. Authentifizierungsvorrichtung (50, 50A, 60) nach einem der Ansprüche
1 bis 4, wobei eine Endzeit der ersten Zeitspanne vor einer Startzeit der zweiten Zeitspanne liegt.

6. Authentifizierungsvorrichtung (50, 50A, 60) nach einem der Ansprüche 1 bis 5, wobei die zweite Zeitspanne den Zeitpunkt beinhaltet, zu dem die Authentifizierungsanforderung von der mobilen Vorrichtung empfangen wurde.

7. Authentifizierungsvorrichtung (50, 50A, 60) nach einem der Ansprüche 1 bis 6, wobei jedes von einem oder mehreren Elementen, die zum ersten Satz gehören, und jedes von einem oder mehreren Elementen, die zum zweiten Satz gehören, unter Verwendung einer Einwegfunktion pseudonymisiert werden.

8. Authentifizierungsvorrichtung (50, 50A, 60) nach einem der Ansprüche 1 bis 7, wobei:
der Authentifikator (534, 634) den echten Nutzer auf der Grundlage eines Ergebnisses des Vergleichs zwischen der Ähnlichkeit und einem Schwellenwert authentifiziert; und
der Schwellenwert auf der Grundlage von Inhalt eines Dienstes festgelegt wird, der dem echten Nutzer zur Verfügung gestellt werden soll, wenn der echte Nutzer authentifiziert ist.

9. Authentifizierungsvorrichtung (50A) nach Anspruch 1, wobei:
der Rechner (533A) so konfiguriert ist, dass er die Ähnlichkeit für jede einer Vielzahl von mobilen Vorrichtungen auf der Grundlage eines ersten Satzes, der für jede der Vielzahl von mobilen Vorrichtungen erzeugt wurde, und des zweiten Satzes berechnet;
der Authentifikator (534) so konfiguriert ist, dass er auf der Grundlage der Ähnlichkeit, die für jede mobile Vorrichtung im Rechner (533A) berechnet wurde, als Teil der Authentifizierung identifiziert, welche Nutzer der Vielzahl mobiler Vorrichtung eine Person ist, die die mobile Vorrichtung während der zweiten Zeitspanne getragen hat.

10. Authentifizierungsvorrichtung (50, 50A, 60) nach Anspruch 1, weiter umfassend:
einen Generator (530, 630), der so konfiguriert ist, dass er den ersten Satz und den zweiten Satz generiert.

## Revendications

1. Appareil d'authentification (50, 50A, 60) comprenant :
une unité de calcul (533, 533A, 633) configurée pour calculer, sur la base d'un premier ensemble et d'un deuxième ensemble, une similarité indiquant le degré de similarité du deuxième ensemble avec le premier ensemble, dans lequel :
le premier ensemble représente des caractéristiques d'un utilisateur réel d'un dispositif mobile et possède en tant qu'éléments des identifiants d'une ou de plusieurs cellules dans lesquelles se trouvait le dispositif mobile pendant une première période antérieure à un moment auquel une demande d'authentification a été reçue ; et
le deuxième ensemble possède en tant qu'éléments des identifiants d'une ou de plusieurs cellules dans lesquelles se trouvait le dispositif mobile pendant une deuxième période différente de la première période ; et
une unité d'authentification (534, 634) configurée pour, sur la base de la similarité, authentifier une personne qui transporte le dispositif mobile pendant la deuxième période comme étant un utilisateur réel.

2. Appareil d'authentification (50, 50A, 60) selon la revendication 1, dans lequel le premier ensemble et le deuxième ensemble incluent, en tant qu'éléments, des identifiants d'une ou de plusieurs cellules différentes obtenus par suppression d'identifiants se chevauchant.

3. Appareil d'authentification (50, 50A, 60) selon la revendication 1 ou la revendication 2, comprenant en outre :
une unité d'acquisition (535, 635) configurée pour acquérir un journal qui inclut un identifiant d'une cellule dans laquelle se trouvait le dispositif mobile et des informations temporelles indiquant un moment auquel le dispositif mobile se trouvait dans la cellule ; et
une unité de génération (530, 630) configurée pour générer le premier ensemble et le deuxième ensemble à partir du journal.

4. Appareil d'authentification (50, 50A, 60) selon la revendication 3, dans lequel :
dans un service de communication radio auquel un utilisateur du dispositif mobile est abonné, des informations d'adresse indiquant une adresse de l'utilisateur sont enregistrées ;
l'unité d'acquisition (535, 635) acquiert les informations d'adresse ; et
lorsque les informations d'adresse acquises par l'unité d'acquisition (535, 635) sont différentes des informations d'adresse précédemment acquises par l'unité d'acquisition (535, 635), l'unité de génération (530, 630) supprime du premier ensemble l'identifiant de la cellule se rapportant aux informations d'adresse antérieures.

5. Appareil d'authentification (50, 50A, 60) selon l'une quelconque des revendications 1 à 4, dans lequel un moment de fin de la première période précède un moment de début de la deuxième période.

6. Appareil d'authentification (50, 50A, 60) selon l'une quelconque des revendications 1 à 5, dans lequel la deuxième période inclut le moment auquel la demande d'authentification a été reçue en provenance du dispositif mobile.

7. Appareil d'authentification (50, 50A, 60) selon l'une quelconque des revendications 1 à 6, dans lequel chacun des un ou plusieurs éléments appartenant au premier ensemble et chacun des un ou plusieurs éléments appartenant au deuxième ensemble sont pseudonymisés à l'aide d'une fonction unidirectionnelle.

8. Appareil d'authentification (50, 50A, 60) selon l'une quelconque des revendications 1 à 7, dans lequel :
l'unité d'authentification (534, 634) authentifie l'utilisateur réel sur la base d'un résultat d'une comparaison entre la similarité et un seuil ; et
le seuil est défini sur la base d'un contenu d'un service devant être fourni à l'utilisateur réel lorsque l'utilisateur réel est authentifié.

9. Appareil d'authentification (50A) selon la revendication 1, dans lequel :
l'unité de calcul (533A) est configurée pour calculer la similarité pour chacun d'une pluralité de dispositifs mobiles, sur la base d'un premier ensemble généré pour chacun de la pluralité de dispositifs mobiles et du deuxième ensemble ;
l'unité d'authentification (534) est configurée pour identifier, dans le cadre de l'authentification, quels utilisateurs de la pluralité de dispositifs mobiles est une personne qui transportait le dispositif mobile pendant la deuxième période, sur la base de la similarité calculée pour chaque dispositif mobile dans l'unité de calcul (533A).

10. Appareil d'authentification (50, 50A, 60) selon la revendication 1, comprenant en outre :
une unité de génération (530, 630) configurée pour générer le premier ensemble et le deuxième ensemble.
